# EUROPEAN PATENT SPECIFICATION

(11) **EP 4 516 588 B1**
(45) Date of publication and mention of the grant of the patent: **15.04.2026**
(21) Application number: 23811871.5
(22) Date of filing: 25.05.2023
(51) Int. Cl.: B60Q 1/26, B60Q 1/46, B60Q 1/38, B60Q 1/44, B60Q 1/52

(54) **LIGHTING CONTROL DEVICE**
BELEUCHTUNGSSTEUERUNGSVORRICHTUNG
DISPOSITIF DE COMMANDE D'ÉCLAIRAGE

(30) Priority: 27.05.2022 JP 2022087079
(43) Date of publication of application: 05.03.2025
(73) Proprietor: Daimler Truck AG, 70771 Leinfelden-Echterdingen (DE)
(72) Inventor: KIKUCHI, Tadashi, Kawasaki-shi, Kanagawa 211-8522 (JP)
(74) Representative: Hofstetter, Schurack & Partner
(86) International application number: PCT/JP2023/019457
(87) International publication number: WO 2023/228999

(56) References cited:
- EP-A1- 3 190 005
- DE-A1- 102008 031 258
- JP-A- 2017 094 757
- JP-A- 2019 111 856
- KR-A- 20190 063 673
- US-A1- 2018 007 756

## Description

### [Technical Field]

The present embodiment relates to a lighting control device for a lamp unit including multiple light emitting device.

### [Background Art]

A vehicle is equipped with various lamps, such as a stop lamp (brake lamp) that lights up when braking, and a turning signal lamp that is used when turning left or right or changing course. Generally, turning signal lamps are provided one on each of the left and right sides of the vehicle, and are also used as a hazard lamp when both are flashed at the same time. As a turning signal lamp, a chain lighting type (so-called flowing blinker, sequential blinker) in which multiple light emitting elements are sequentially lit so as to look like flowing from the inside to the outside has become popular.

In recent years, a technique has been developed which uses, when the hard braking by harsh depressing operation of the braking pedal or by the automatic braking system, the stop lamp or the turning signal lamps (hazard lamps) also as emergency braking indicator lamps by flashing the stop lamps or the turning signal lamps at a high frequency (i.e., rapidly) (e.g., see JP 2017-24487 A, JP 2020-82942 A or KR 2019 0063673 A). Such emergency braking indicator lamps can notify a following vehicle of hard deceleration of the own vehicle, and therefore can prevent the following vehicle from bumping.

### [Summary of Invention]

### [Technical Problem]

Incidentally, into a lighting control device that controls a lamp unit of the chain lighting type, a first signal that instructs sequential lighting to sequentially light the multiple light emitting elements one after another is inputted. On the other hand, into a lighting control device that controls a lamp unit of the chain lighting type also used for emergency braking indicator lamps, a second signal that instructs rapid flashing to rapidly flash all the multiple light emitting elements is inputted as well as the first signal.

The lighting control device, in which both the first signal and the second signal are inputted, discriminates the inputted signal and then controls the lamp unit according to the result of the discrimination. However, in order to enhance the responsiveness to the inputted signal, it is effective to first start lighting of the lamp unit even when either the first signal or the second signal is received. For example, one of the conceivable controlling scheme may first start, when some signal is received, sequentially lighting of the lamp unit, and discriminate the inputted signal during this lighting. In such a controlling scheme, on the basis of the result of the discrimination, the sequential lighting is maintained when the first signal is received and switches the sequential lighting to the rapid flashing when the second signal is received.

However, in the above-described controlling scheme, the lamp unit is suddenly switched from the sequential lighting to the rapid flashing when the second signal is received. Consequently, the multiple light emitting elements in the lamp unit will all simultaneously flash at a high speed after being sequentially lit one after another in the middle, there is a risk that the function as an emergency braking indicator lamp is not sufficiently ensured. Therefore, the conventional controlling scheme needs to be improved in order to rationalize the lighting status of the lamp unit both when the multiple light emitting elements are sequentially lit one after another and when all the multiple light emitting elements are flashed.

With the foregoing problems in view, one of the objects of the present embodiment is to rationalize the lighting status of the lamp unit both when the multiple light emitting elements are sequentially lit one after another and when all the multiple light emitting elements are flashed.

### [Solution to Problem]

The present embodiments developed in order to solve at least part of the above problems, and the following embodiments can be achieved as application examples.
(1) A lighting control device of the present application example controls a lamp unit including a plurality of light emitting elements in a vehicle, and includes a receiver that receives a first signal and a second signal having a period shorter than a period of the first signal; and a controller that, when the receiver receives the first signal, lights all the plurality of light emitting elements and then sequentially lights the plurality of light emitting elements one after another, and when the receiver receives the second signal, lights all the plurality of light emitting elements and then flashes all the plurality of light emitting elements.

According to this application example, even when either the first signal or the second signal is received, lighting all the light emitting elements first makes it possible to prevent the sequential lighting from being suddenly switched to rapid flashing when the second signal is received. Therefore, it is possible to rationalize the lighting status of the lamp unit both when the sequentially lighting that sequentially lights the multiple light emitting elements one after another and when the rapid flashing that flashes all the multiple light emitting elements.

(2) In the lighting control device of the present application example, the first signal may be a signal that activates the lamp unit as a turning signal lamp used when the vehicle is turning left or right or a hazard lamp used when the vehicle is stopping or parking; and the second signal may be a signal that activates the lamp unit as an emergency braking display light used when the vehicle is emergency braking.

According to this configuration, it is possible to rationalize the lighting status of a lamp unit serving as either the turning signal lamp or the hazard lamp along with the emergency braking indicator lamp. Thus, the reliability of r the turning signal lamp or the hazard lamp along with the emergency braking indicator lamp can be enhanced.

(3) In the lighting control device of the present application example, the first signal may be a signal that activates the lamp unit as at least one of a stop lamp and a high mount stop lamp used when the vehicle is braking at deceleration less than a threshold; and the second signal may be a signal that activates the lamp unit as an emergency braking display light used when the vehicle is braking at deceleration equal to or more than a threshold.

This configuration makes it possible to rationalize the lighting status of the lamp unit serving as at least one of the stop lamp and the high mount stop lamp along with the emergency braking indicator lamp. Accordingly, the reliability of at least one of stop lamp and high mount stop lamp along with the emergency braking indicator lamp can be enhanced.

(4) In the lighting control device of the present application example, the receiver may receive the first signal and the second signal through a common signal line.

When the first signal and the second signal are received though a common signal line as the above, it is difficult to discriminate the first signal and the second signal from each other as compared with cases where the first signal and the second signal are received through respective different signal lines. In contrast, in the present application example, since all light emitting elements are first lit when either the first signal or the second signal is received described above, it is possible to avoid the sequential lighting during discriminating of the signal. This makes it possible to rationalize the lighting status of the lamp unit for both the sequential lighting and the rapid flashing even if it is difficult to discriminate the signal. In addition, using a common signal line for the first signal and the second signal can reduce the number of signal lines and can simplify wiring routing as compared with cases where dedicated signal lines are provided one for each of the first signal and the second signal.

(5) In the lighting control device of the present application example, the controller may light, when the receiver receives the first signal, lights all the plurality of light emitting elements for a first time correlated with a period of the first signal and then sequentially lights the plurality of light emitting elements one at a time, and may light when the receiver receives the second signal, lights all the plurality of light emitting elements for a second time shorter than the first time and then flashes all the plurality of light emitting elements.

According to this configuration, it is possible to perform the full-on of the light emitting elements when the rapid flashing shorter than when the sequential lighting. Therefore, the lighting status of the lamp unit in the rapid flashing can be rationalized.

### [Advantageous Effects of Invention]

According to the present embodiment, the lighting status of the lamp unit can be rationalized for both when the multiple light emitting elements are sequentially lit one after another and when the multiple light emitting elements are all flashed.

### [Brief Description of Drawing]

[FIG. 1] FIG. 1 is a diagram showing a rear face applied with a lighting control device according to a first embodiment;
[FIG. 2] FIG. 2 is a block diagram showing the lighting control device of FIG. 1;
[FIG. 3] FIG. 3 is a graph (time chart) showing a lighting status of a lamp unit controlled with a first signal and a second signal by the lighting control device of FIG. 1;
[FIG. 4] FIG. 4 is a schematic diagram showing an example of sequential lighting of the lamp unit by the lighting control device of FIG. 1;
[FIG. 5] FIG. 5 is a schematic diagram showing an example of rapid flashing of the lamp unit by the lighting control device of FIG. 1;
[FIG. 6] FIG. 6 is a flow diagram illustrating an example of a procedure of control executed by the lighting control device of FIG. 1;
[FIG. 7] FIG. 7 is a diagram showing a rear face applied with a lighting control device according to a second embodiment;
[FIG. 8] FIG. 8 is a graph (time chart) showing a lighting status of a lamp unit controlled with a first signal and a second signal in a traditional control manner;

### [Description of Embodiments]

An embodiment of the present disclosure will now be described with reference to the accompanying drawings. The following example is merely and there is no intention to exclude various modification and application of techniques not explicitly described in the embodiment. Each structure of the following embodiment can be variously modified without departing from the scope thereof, and can be selected or omitted according to requirement, or combined in an appropriate combination.

### [1. First Embodiment]

### [1-1.Configuration of Device]

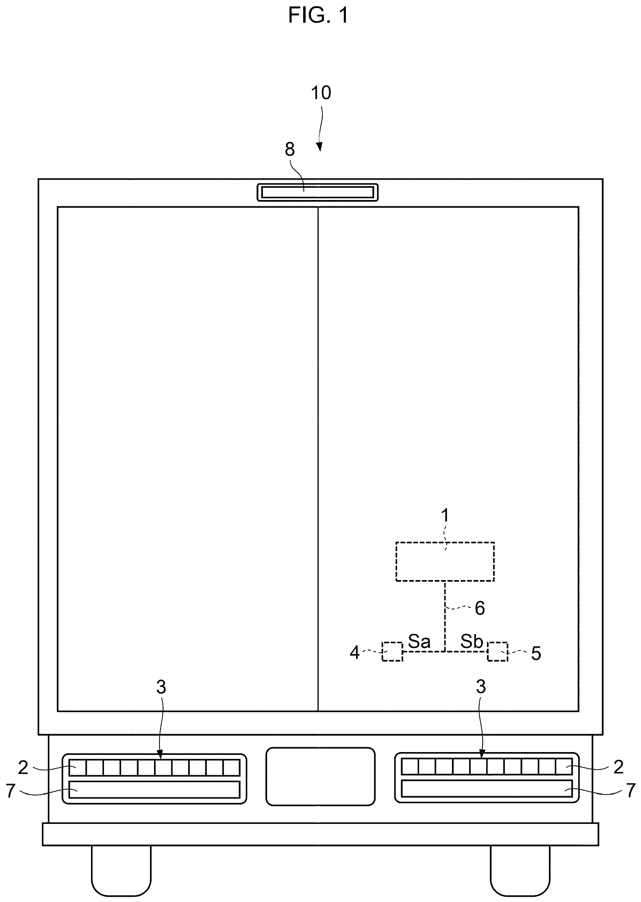

As shown in FIG. 1, a lighting control device 1 according to the first embodiment is applied to a vehicle 10 provided with lamp units 3 each including multiple light emitting elements 2. The present embodiment illustrates a vehicle 10 being a truck. In the drawings, a reference number is attached to only one of the multiple light emitting elements 2 provided in the each lamp unit 3.

A lamp unit 3 is a lighting device of the chained lighting type that sequentially lights the multiple light emitting element 2 one after another. The lamp unit 3 of the present embodiment functions as a turning signal lamp (so-called flowing blinker, sequential blinker) used when the vehicle 10 turns left and right. The lamp unit 3 functioning as a turning signal lamp is disposed on each of the left and right sides in the front and rear faces of the vehicle 10. In addition to (or instead of) the turning signal lamp, the lamp unit 3 may function as a hazard lamp used when vehicle 10 is parked or stopped.

The multiple light emitting elements 2 are arranged along vehicle width direction (left-right direction) in the each lamp unit 3, for example. The present embodiment illustrates a lamp unit 3 in which ten light emitting elements 2 configured the same as one another are arranged along the vehicle width direction. However, the number and arrangement of the light emitting elements 2 in each lamp unit 3 are not limited to the examples shown here.

The lamp unit 3 of the present embodiment also functions as an emergency braking indicator lamp used during emergency braking of the vehicle 10. The emergency braking indicator lamp flashes at a high frequency (high speed) during sudden braking of the vehicle 10 to alert the surroundings of the vehicle 10. The emergency braking indicator lamp is used, for example, during emergency braking of the vehicle 10 at deceleration equal to or more than a threshold Th.

The lamp unit 3, when functions as a turning signal lamp, takes a sequential lighting manner in which the multiple light emitting elements 2 are sequential lit one after another, and when functioning as an emergency braking indicator lamp, takes a rapid flashing manner in which the multiple light emitting elements 2 all simultaneously flash rapidly. The lighting status of each lamp unit 3 is controlled by the lighting control device 1.

The vehicle 10 of the present embodiment is further provided with stop lamps 7 and a high mount stop lamp 8 that are used during braking of the vehicle 10. The stop lamps 7 are arranged on the right and left sides of the rear face of the vehicle 10.
Further, the high mount stop lamp 8 is disposed at a higher position than the stop lamps 7 at the rear face of the vehicle 10. FIG. 1 illustrates two stop lamps 7 arranged under the left and right lamp units 3 in the rear face of the vehicle 10, and one high mount stop lamp 8 arranged on the center of the upper end of the rear face of the vehicle 10.

The stop lamps 7 and the high mount stop lamp 8 are controlled so as to light in accordance with a depressing operation of a non-illustrated brake pedal equipped in the driver's seat of the vehicle 10. The stop lamps 7 and the high mount stop lamp 8 are used, for example, during braking of vehicle 10 at deceleration less than the threshold Th. Incidentally, the stop lamps 7 are also referred to as braking lamps (brake lamps), and the high mount stop lamp 8 is also referred to as an auxiliary braking lamp.

The vehicle 10 is provided with a first sensor 4 that detects a trigger to sequentially light a lamp unit 3, and a second sensor 5 that detects a trigger to rapidly flash the lamp unit 3. The first sensor 4 is, for example, a sensor that detects the position of the non-illustrated blinker lever (turn signal lever) arranged at the driver's seat of the vehicle 10. The second sensor 5 is, for example, a sensor that detects sudden braking of the vehicle 10. More specifically, the second sensor 5 may be a brake sensor that detects a sudden depression of the brake pedal, a front sensor that detects the possibility of a front collision of the vehicle 10 to activate the automatic brake system, a deceleration sensor that detects sudden deceleration of the vehicle 10, or the like.

The first sensor 4 and the second sensor 5 are connected to the lighting control device 1 through a common (same) signal line 6. When detecting a trigger of the sequential lighting (e.g., operation of the blinker lever to a predetermined position), the first sensor 4 transmits a first signal Sa to the lighting control device 1 through the signal line 6. Similarly, when detecting a trigger of rapid flashing (e.g., a sudden depression of the brake pedal), the second sensor 5 transmits a second signal Sb to the lighting control device 1 through the signal line 6. Thus, the first signal Sa and the second signal Sb are inputted into the lighting control device 1 through the common (same) signal line 6.

The lighting control device 1 is an electronic control unit (e.g., VCU; Vehicle Control Unit) that collectively controls various devices mounted on the vehicle 10. The lighting control device 1 is configured as, for example, an LSI device or a built-in electronic device in which a microprocessor, a ROM, a RAM, and the like are integrated, and is connected to the communication line of an on-board network provided in the vehicle 10.

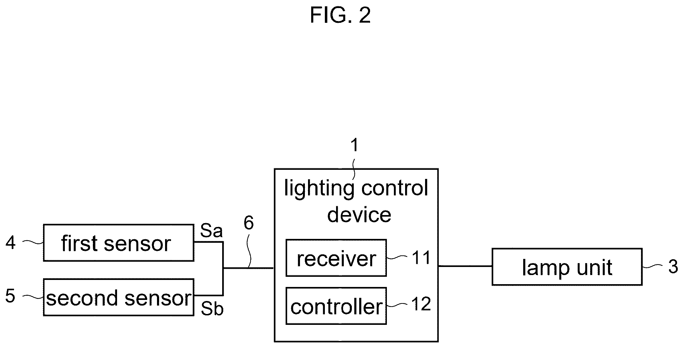

As shown in FIG. 2, in the lighting control device 1 of the present embodiment, the first sensor 4 and the second sensor 5 are connected to its input side, the lamp units 3 are connected to its output side. The lighting control device 1 performs sequential lighting control that sequentially lights the lamp unit 3 and rapid flashing control that rapidly flashes the lamp unit 3 in response to the first signal Sa and the second signal Sb inputted from the first sensor 4 and the second sensor 5, respectively.

### [1-2.Configuration of Control]

The lighting control device 1 includes a receiver 11 and a controller 12 as elements for implementing the sequential lighting control and the rapid flashing control. The receiver 11 and the controller 12 may be provided as software or hardware, or may be provided as a function of a computer program executable by the lighting control device 1.

The receiver 11 receives the first signal Sa and the second signal Sb. The receiver 11 of the present embodiment receives the first signal Sa and the second signal Sb through the common signal line 6 from the first sensor 4 and the second sensor 5, respectively. The first signal Sa of the present embodiment is a signal that activates the lamp unit 3 as the turning signal lamp. Further, the second signal Sb of the present embodiment is a signal that activates the lamp unit 3 as the emergency braking indicator lamp. The first signal Sa can be said to be a signal instructing the sequential lighting of the lamp unit 3, and the second signal Sb can be said to be a signal instructing the rapid flashing of the lamp unit 3. When the lamp units 3 function as hazard lamps, the first signal Sa may be a signal that activates the lamp units 3 as hazard lamps.

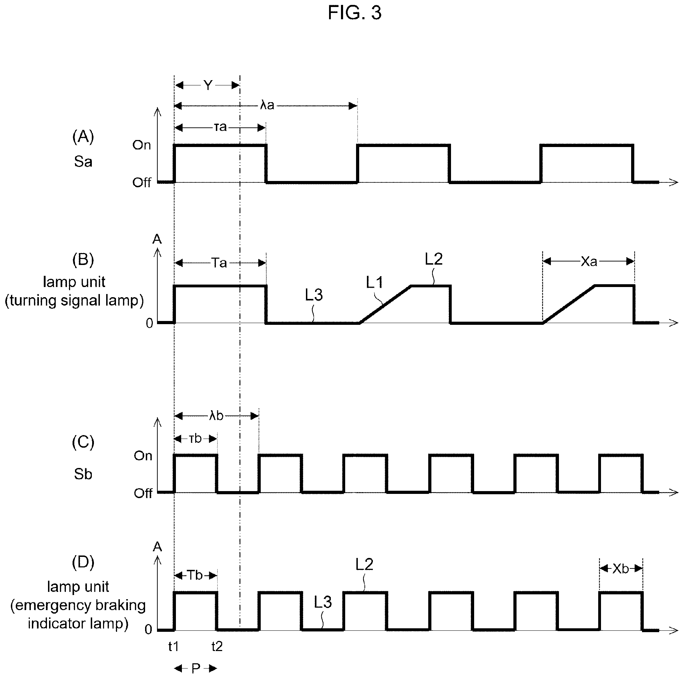

FIG. 3 is a graph (timing chart) showing the waveforms of the first signal Sa and the second signal Sb, and the waveforms of the lighting status of the lamp unit 3 in accordance with these signals Sa and Sb. As illustrated by graphs (A) and (C) in FIG. 3, the first signal Sa and the second signal Sb of the present embodiment are both on-off signals. More specifically, the first signal Sa and the second signal Sb are pulse waves (rectangular waves) each having a duty ratio of 50% and have similar waveforms to each other. However, the first signal Sa and the second signal Sb have different periods λa and λb, respectively, which also causes the respective pulse widths τa, τb to be different from each other.

The graph (B) in FIG. 3 represents a lighting status of the lamp unit 3 which operates as a turning signal lamp in response to the first signal Sa. Further, the graph (D) in FIG. 3 represents a lighting status of the lamp unit 3 which operates as an emergency braking indicator lamp in response to the second signal Sb. In the graph (B), the upward-sloping oblique line L1 represents a state in which the multiple light emitting elements 2 are sequentially lit. Further, the graphs (B) and (D), a horizontal line L2 having an amplitude A (A≠0) represents a state in which all the multiple light emitting elements 2 are lit, and a horizontal line L3 having no amplitude A (A=0) represents a state in which all the multiple light emitting elements 2 are unlit.

Generally, the turning signal lamp flashes at a frequency of 1 to 2 Hz. Accordingly, the pulse width τa of the first signal Sa shown in the graph (A) is usually 250 to 333 ms. In relation to this, the lighting time Xa during which at least one light emitting element 2 is lit is normally 250 to 333 ms in each cycle of the sequential lighting of the lamp unit 3 shown in the graph (B).

On the other hand, the emergency braking indicator lamp flashes at a frequency of 3 to 5 Hz. Accordingly, the pulse width τb of the second signal Sa shown in the graph (C) is usually 100 to 167 ms. In relation to this, the lighting time Xb during which all the light emitting elements 2 are simultaneously lit is normally 100 to 167 ms in each cycle of the rapid flashing of the lamp unit 3 shown in Graph (D).

As the above, the period lambda λb and the pulse width τb of the second signal Sb that instructs the rapid flashing are shorter than period λa and the pulse width τa of the first signal Sa that instructs sequential lighting, respectively (λb<λa, τb<τa). Further, consequently, the lighting time Xb of each cycle of the rapid flashing is shorter than the lighting time Xa of each cycle of the sequential lighting (Xb<Xa).

The controller 12 controls the multiple light emitting elements 2 in accordance with the signal received by the receiver 11. Specifically, when some signal is received in the receiver 11, the receiver 12 discriminates whether the signal is the first signal Sa and the second signal Sb. Then, if the signal received by the receiver 11 is the first signal Sa, the controller 12 performs the sequential lighting control, and if the signal received by the receiver 11 is the second signal Sb, the controller 12 performs the rapid flashing control.

However, as described above, since the first signal Sa and the second signal Sb have respective different period λa and λb and respective different pulse widths τa and τb, but have similar waveforms and are inputted into the receiver 11 through the common signal line 6, it is difficult to discriminate the first signal Sa and the second signal Sb from each other. That is, the first signal Sa and the second signal Sb inputted from the common signal line 6 cannot be discriminated on the basis of signal line 6 because there is no difference in signal line 6, and need to be discriminated on the basis of the differences of periods λa and λb and pulse widths τa and τb.

However, as shown in FIG. 3, during the period P between the first time point t1 at which the receiver 11 receives the first signal Sa or the second signal Sb and the second time point t2 at which time corresponding to the pulse width τb of the second signal Sb elapses from the first time point, the first signal Sa and the second signal Sb have the same waveform as each other. Therefore, during at least this period **P,** it is difficult for the controller 12 to discriminate the first signal Sa and the second signal Sb from each other.

As a solution to this, even when either the first signal Sa or the second signal Sb is received in receiver 11, the controller 12 lights all the multiple light emitting elements 2 first. In other words, even if the signal inputted into the receiver 11 is the first signal Sa, which instructs the sequential lighting, the controller 12 lights all the light emitting elements 2 first. This allows the controller 12 to reserve a time for discriminating the signal inputted into the receiver 11.

Then, for example, when the pulse width τ of the received signal is equal to or more than a given value Y (τ≥Y), the controller 12 determines that the signal is the first signal Sa, and if otherwise (τ<Y), the controller 12 determines that the signal is the second signal Sb. Here, the given value Y is preset as a value between the pulse width τa of the first signal Sa and the pulse width τb of the second signal Sb (τb<Y<τa). Instead of such discrimination based on the pulse widths τ, the discrimination may be based on the periods or the frequencies correlated to pulse widths τ.

When the first signal Sa is received in the receiver 11, the controller 12 lights all the light emitting elements 2 as the above and after that sequentially lights the multiple light emitting elements 2 one after another. As shown in the graph (B) in FIG. 3, when the first signal Sa is received in the receiver 11, the controller 12 of the present embodiment first lights all the multiple light emitting elements 2 for the first time Ta correlated with the period λa (pulse width τa) of the first signal Sa, and after that, sequentially lights the multiple light emitting elements one after another.

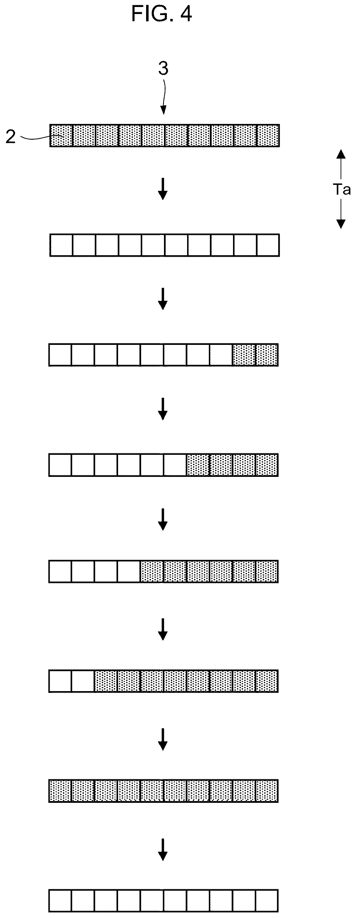

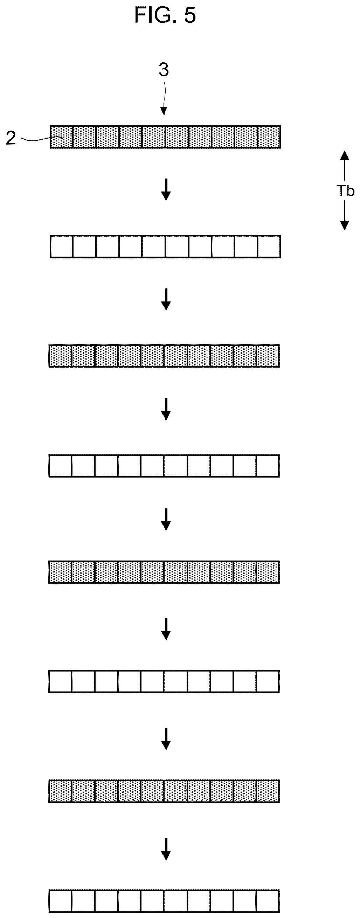

Accordingly, as shown in FIG. 4, when the first signal Sa is inputted, all the light emitting elements 2 are simultaneously lit first for the first time Ta, then all the light emitting elements 2 are turned off, and after that the light emitting elements 2 are sequentially lit one after another. In contrast to a typical sequential lighting, which sequentially lights the light emitting elements 2 from full-off to full-on, the sequentially lighting of the present embodiment begins with lighting all the light emitting elements 2, then turns off all the light emitting elements 2, and sequentially lights the light emitting elements 2 one after another. Incidentally, in FIG. 4 and FIG. 5 to be described below represent a light emitting element 2 in the lighting status by halftone dots. FIG. 4 shows an example of the sequential lighting in which the multiple light emitting element 2 are sequentially lit so as to look like flowing from the right side (inside) toward the left side (outside) when the vehicle 10 is turning left.

On the other hand, when the second signal Sb is received in the receiver 11, the controller 12 lights all the light emitting elements 2 as the above and after that flashes all the multiple light emitting elements 2. As shown in the graph (D) in FIG. 3, when the second signal Sb is received in the receiver 11, the controller 12 of the present embodiment first lights all the multiple light emitting elements 2 for the second time Tb correlated with the period λb (pulse width τb) of the second signal Sb, and after that, flashes all the multiple light emitting elements 2. That is, when the second signal Sb is inputted, the controller 12 first lights all the light emitting elements 2 for the second time Tb shorter than the first time Ta.

Accordingly, as shown in FIG. 5, when the second signal Sb is inputted, all the light emitting elements 2 are first lit in the same manner as performed when the first signal Sa is inputted. However, when the second signal Sb is inputted, full-on is executed only for a shorter time (second time Tb) less than the time when the first signal Sa is inputted, and then all the light emitting element 2 flashes simultaneously (full-on and full-off are repeated).

The controller 12 of this embodiment terminates the sequential lighting and the rapid flashing of the lamp unit 3 when a given termination condition is satisfied. The termination condition may be, for example, that first signal Sa or the second signal Sb are not received by the receiver 11 any longer. Alternatively, the termination condition for terminating the sequential lighting may be that the blinker lever has been returned to its normal position. Further alternatively, the termination condition for terminating the rapid flashing may be that rapid flashing control has been performed for a predetermined time or longer.

### [1-3. Flow Diagram]

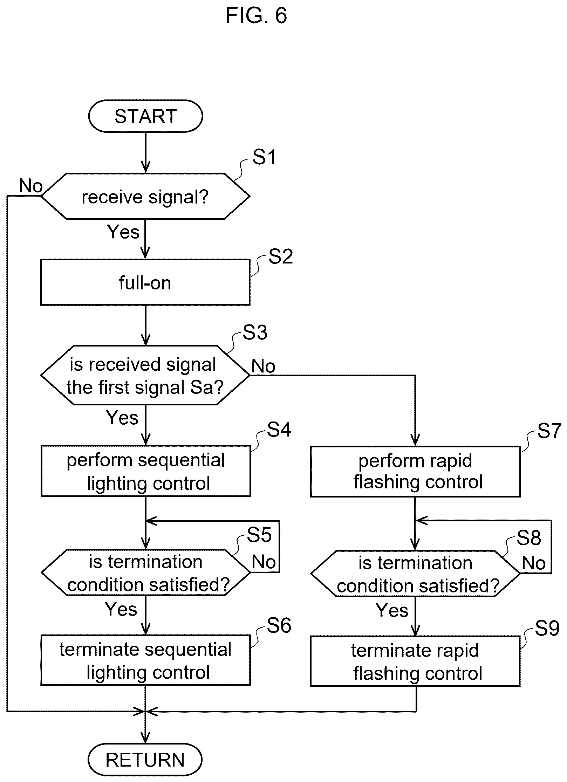

FIG. 6 is a flowchart illustrating an example of the procedure of the control implemented in the lighting control device 1. This flow is executed in the lighting control device 1 when the vehicle 10 is in a runnable condition (engine-on or power-on). It is assumed that, at the start of the flow, every light emitting element 2 of the lamp unit 3 is turned off.

As shown in FIG. 6, first of all, whether or not the first signal Sa or the second signal Sb is received by the receiver 11 (Step S1). If neither the first signal Sa nor the second signal Sb is received (NO route in Step S1), the flow is returned. On the other hand, if the first signal Sa or the second signal Sb is received (YES route in Step S1), the multiple light emitting elements 2 is controlled, by the controller 12, so as to be all lit (Step S2). That is, even if the signal received by receiver 11 is either the first signal Sa or the second signal Sb, the controller 12 lights all the light emitting elements 2 of the lamp unit 3.

Then, whether the signal received by the receiver 11 is the first signal Sa or the second signal Sb is determined in the controller 12 (Step S3). Here, if the received signal is determined to be the first signal Sa (YES route in Step S3), the sequential lighting control is performed by the controller 12 (Step S4). That is, in this case, the lamp unit 3 operates as a turning signal lamp. After the predetermined termination condition is satisfied (YES route in Step S5), the sequential lighting control is terminated (Step S6), and the flow is returned.

On the other hand, if the received signal is determined to be the second signal Sb (NO route in Step S3), the rapid flashing control is performed by the controller 12 (Step S7). That is, in this case, the lamp unit 3 operates as an emergency braking indicator lamp. After the predetermined termination condition is satisfied (YES route in Step S8), the rapid flashing control is terminated (Step S9), and the flow is returned.

### [1-4. Actions and Effects]

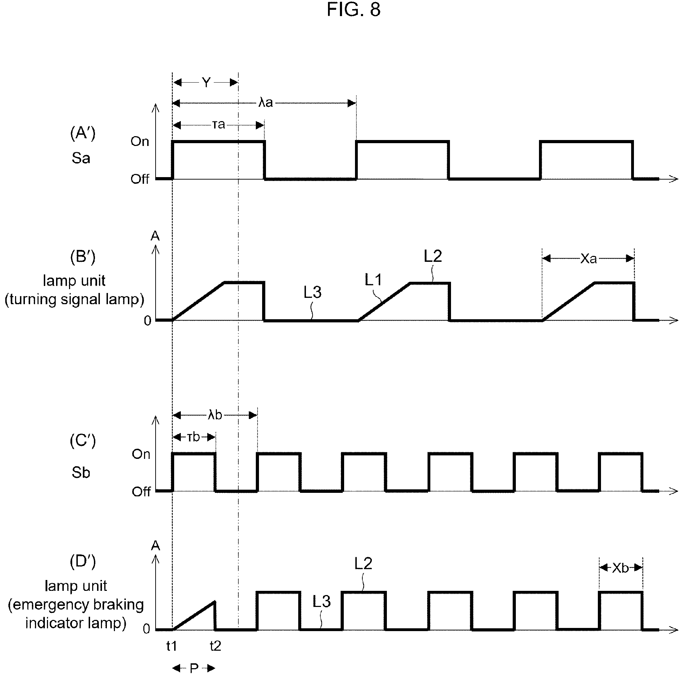

FIG. 8 is a graph (time chart) illustrating an example of waveforms according to a conventional controlling scheme. The graphs (A') and (C') of FIG. 8 represent the waveforms of the first signal Sa and the second signal Sb, respectively, and the same as the graphs (A) and (C) of FIG. 3. In addition, the graph (B') of FIG. 8 represents the lighting status of the lamp unit 3 operating as a turning signal lamp in the conventional controlling scheme, and the graph (D') of FIG. 8 represents the lighting status of the lamp unit 3 operating as an emergency braking indicator lamp in the conventional controlling scheme. In FIG. 8, like reference signs designate the same or corresponding elements as those in FIG. 3.

As shown in FIG. 8, the conventional controlling scheme has first started, even when either the first signal Sa or the second signal Sb was inputted, the sequential lighting of the lamp unit 3 and discriminated the signal during the sequential lighting. That is, conventionally, even when either the first signal Sa or the second signal Sb was inputted, the sequential lighting of the lamp unit 3 has been started at the time point t1. Then, if the signal was continuously received after the above second time point t2, the input signal has been determined to be the first signal Sa and the sequential lighting has been maintained, but if the signal was interrupted after the above second time point t2, the input signal has been determined to be the second signal Sb and the sequential lighting has been switched to the rapid flashing.

Therefore, as shown in the graph (D'), in the conventional controlling scheme, the lamp unit 3 has been suddenly switched from the sequential lighting to the rapid flashing when the second signal Sb was received. For this reason, the multiple light emitting elements 2 have been all simultaneously flash at a high speed after being sequentially lit one after another in the middle. Accordingly, the conventional controlling scheme had a risk that the lamp unit 3 did not sufficiently exert the function as the emergency braking indicator lamp.

In contrast, in the lighting control device 1, if the first signal Sa is received, the multiple light emitting elements 2 are all lit and then sequentially lit one after another, and if the second signal Sb is received, the multiple light emitting elements 2 are all lit and then are all flashed. Therefore, as shown in FIG. 4, when the first signal Sa is received, the multiple light emitting elements 2 are all lit and then sequentially lit one after another. In other words, when the first signal Sa is received, after undergoing full-on and then full-off, the light emitting elements 2 are sequentially lit one after another. On the other hand, as shown in FIG. 5, when the second signal Sb is received, after undergoing full-on, the light emitting elements 2 are flashed.

As the above, even when either the first signal or the second signal is received, lighting all the light emitting elements 2 first makes it possible to prevent the sequential lighting from being suddenly switched to the rapid flashing when the second signal Sb is received. In addition, since, when the first signal Sa is received, the light emitting elements 2 are sequentially lit one after another after undergoing full-on and then full-off, the sequential lighting can be appropriately accomplished, and the light intensity at the start of the sequentially lighting is ensured by full-on, so that the clarity can be enhanced. Accordingly, the lighting control device 1 can rationalize the lighting status of the lamp unit 3 both when the sequentially lighting that sequentially lights the multiple light emitting elements 2 one after another and when the rapid flashing that flashes all the multiple light emitting elements 2.

If the first signal Sa and the second signal Sb are signals to activate the lamp unit 3 to be the turning signal lamp and the emergency braking indicator lamp, respectively, the lighting status of the lamp unit 3 serving as either the turning signal lamp or the emergency braking indicator lamp can be rationalized. Consequently, the reliability of the turning signal lamp and the emergency braking indicator lamp can be enhanced.

In addition, if the first signal Sa and the second signal Sb are signals to activate the lamp unit 3 to be the hazard lamp and the emergency braking indicator lamp, respectively, the lighting status of the lamp unit 3 as either the hazard lamp or the emergency braking indicator lamp can be rationalized. Thus, the reliability of the hazard lamp and the emergency braking indicator lamp can be enhanced.

When the first signal Sa and the second signal Sb are received through a common signal line, it is difficult to discriminate the first signal Sa and the second signal Sb from each other as compared with cases where the first signal Sa and the second signal Sb are received from respective different signal lines. Since the conventional controlling scheme has executed the sequential lighting when receiving some signal, the sequential lighting has been performed while the signal was being discriminated even when the second signal Sb was received, so that there has been a risk that the rapid flashing has not appropriately executed.

In contrast, in the lighting control device 1, since all light emitting elements 2 are first lit when either the first signal Sa or the second signal Sb is received as described above, it is possible to avoid the sequential lighting during the discrimination of the signal. This makes it possible to rationalize the lighting status of the lamp unit 3 for both the sequential lighting and the rapid flashing even if it is difficult to discriminate the signal during the period P shown in FIG. 3. In addition, using the common signal line 6 for the first signal Sa and the second signal Sb can reduce the number of signal lines and can simplify wiring routing as compared with the case where dedicated signal lines are provided one for each of the first signal Sa and the second signal Sb.

By lighting all the multiple light emitting elements 2 for the first time Ta when the first signal Sa is received and by lighting all the multiple light emitting elements 2 for the second time Tb shorter than the first time Ta when the second signal Sb is received, full-on of the light emitting elements 2 when the rapid flashing can be accomplished for a shorter time than that performed when the sequentially lighting. Therefore, the lighting status of the lamp unit 3 in the rapid flashing can be further rationalized.

If the lamp unit 3 is a lighting device (e.g., turning signal lamp or hazard lamps) provided on each of the front and rear faces of the vehicle 10, the sequential lighting and the rapid flashing can be performed to the forward side and the rear side of the vehicle 10. This makes it possible to notify the proceeding vehicle and the oncoming vehicles by the sequential lighting and the rapid flashing as well as the following vehicle, it is possible enhance the notification of both the sequential lighting and the rapid flashing to the surroundings.

### [2. Second Embodiment]

### [2-1.Configuration]

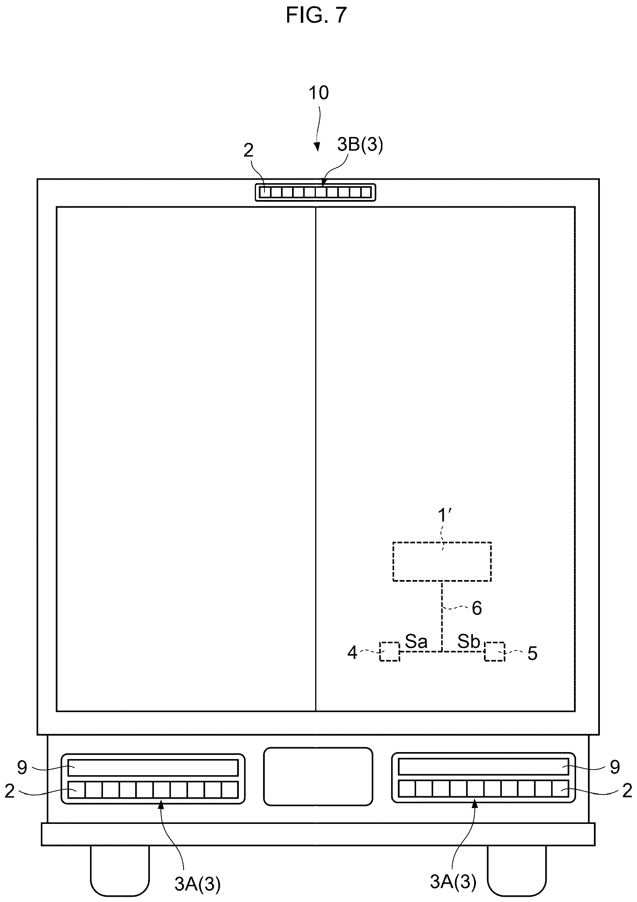

As shown in FIG. 7, a lighting control device 1' according to a second embodiment is different from the lighting control device 1 according to the first embodiment described above in the point that the lamp unit 3 to be controlled functions as at least one of a stop lamp, not a turning signal lamp, and a high mount stop lamp, but the remaining of the lighting control device 1' is the same as the lighting control device 1. In the present embodiment, like reference numbers designate the same or similar elements or parts described in the above embodiment and repetitious description is omitted here.

The lamp unit 3 of the present embodiment is provided as the stop lamp and the high mount stop lamp described in the first embodiment. Specifically, the vehicle 10 of the present embodiment is provided with two types of lamp units 3, i.e., a lamp unit 3A functioning as a stop lamp and a lamp unit 3B functioning as a high mount stop lamp. Hereinafter, when not distinguishing from each other, these lamp units 3A and 3B collectively referred to as a "lamp unit 3".

The lamp units 3A each functioning as the stop lamps are arranged on the right and left sides of the rear face of the vehicle 10. Further, the lamp unit 3B functioning as the high mount stop lamp is disposed at a higher position than the stop lamps 7 on the rear face of the vehicle 10. FIG. 7 illustrates the lamp units 3A and 3B arranged at the same positions as the stop lamps and the high mount stop lamp described in the first embodiment.

The lamp unit 3, when functioning as at least one of the stop lamp and a high mount stop lamp, takes the sequential lighting manner, and when functioning as an emergency braking indicator lamp, takes the rapid flashing manner. The lighting status of each lamp unit 3 is controlled by the lighting control device 1'.

The vehicle 10 of this embodiment is provided with turning signal lamps 9 used when the vehicle 10 turns left and right.
As described in the above first embodiment, the turning signal lamp 9 is disposed on each of the left and right sides of the front and rear faces of the vehicle 10. The lighting status of the turning signal lamps 9 is controlled, for example, in response to the operation of the blinker lever. The turning signal lamps 9 of the present embodiment do not have to be of a chain lighting type. The turning signal lamps 9 may also be used as a hazard lamp used when the vehicle 10 is parked or stopped.

The control configuration of the lighting control device 1' is the same as that of the first embodiment described above. This means that, also in the lighting control device 1', the receiver 11 receives the first signal Sa and the second signal Sb. Further, when the first signal Sa is received in the receiver 11, the controller 12 lights all the light emitting elements 2 and after that, sequentially lights the multiple light emitting elements 2 one after another. On the other hand, when the second signal Sb is received in the receiver 11, the controller 12 lights all the light emitting elements 2 and after that, flashes all the multiple light emitting elements 2.

The first signal Sa of the present embodiment is a signal that activates the lamp unit 3 as a stop lamp and a high mount stop lamp used when the vehicle is braking at deceleration less than the threshold Th. Further, a second signal Sb of the present embodiment is a signal that activates the lamp unit 3 as an emergency braking indicator lamp used when the vehicle is emergency braking at deceleration equal to or more than the threshold Th. Also in this embodiment, the first signal Sa can be said to be a signal instructing the sequential lighting of the lamp unit 3, and the second signal Sb can be said to be a signal instructing the rapid flashing of the lamp unit 3. The threshold Th is set in advance to be deceleration that can be regarded as sudden deceleration. In the case of emergency braking where the deceleration of the vehicle 10 is equal to or more than the threshold Th, the notification to the following vehicle becomes particularly critical to avoid bumping of the following vehicle.

### [2-2.Action and Effects]

As described above, in the present embodiment, the first signal Sa is a signal that activates the lamp unit 3 as at least one of a stop lamp and a high mount stop lamp, and the second signal Sb is a signal that activates the lamp unit 3 as an emergency braking indicator lamp. With this configuration, like the first embodiment, even when either the first signal Sa or the second signal Sb is received, first lighting all the light emitting elements 2 makes it possible to prevent the sequential lighting from being suddenly switched to the rapid flashing when the second signal Sb is received. In addition, since, when the first signal Sa is received, the light emitting elements 2 are sequentially lit one after another after undergoing full-on and then full-off, the sequential lighting can be appropriately accomplished, and the light intensity at the start of the sequentially lighting is ensured by full-on, so that the clarity can be enhanced.

Accordingly, the lighting control device 1' of the present embodiment also makes it possible to rationalize the lighting status of the lamp unit 3 when both the sequential lighting and the rapid flashing. That is, the lighting status of the lamp unit 3 can be rationalized when serving as at least one of the stop lamp and the high mount stop lamp along with the emergency braking indicator lamp. Accordingly, the reliability of at least one of stop lamp and high mount stop lamp along with the emergency braking indicator lamp can be enhanced.

In addition, the same configuration of the lighting control device 1' of the present embodiment as the first embodiment obtains the same actions and effects as those of the first embodiment.

### [3. Modification]

All of the waveforms shown in FIG. 3 are exemplary. It is sufficient that the first signal Sa is any signal that instructs the sequential lighting of the lamp unit 3, and its application thereof is not limited to the turning signal lamp, the hazard lamps, the stop lamp, and the high mount stop lamp described the above. Similarly, it is sufficient that the second signal Sb is a signal that instructs flashing at a shorter period (at a higher frequency, more rapidly) than the first signal Sa, and the application thereof is not limited to the above emergency braking indicator lamp.

The receiver 11 may receive the first signal Sa and the second signal Sb from respective different signal lines. The senders of the first signal Sa and the second signal Sb may be devices except for the first sensor 11 and the second sensor 12.

The number and arrangement of each of the various devices, such as the lamp units 3, the stop lamps 7, the high mount stop lamp 8, and the turning signal lamp 9 provided in the vehicle 10 are not limited to those described in the above examples. Further, the vehicle 10 is not limited to a truck, and may alternatively be exemplified by a bus, a passenger car, a motorbike, or the like.

### [Reference Signs List]

- 1,1': lighting control device
- 2: light emitting element
- 3,3A,3B: lamp unit
- 4: first sensor
- 5: second sensor
- 6: signal line
- 7: stop lamp
- 8: high mount stop lamp
- 9: turning signal lamp
- 10: vehicle
- 11: receiver
- 12: controller
- A: amplitude
- L1: oblique line
- L2: horizontal line
- L3: horizontal line
- P: period
- Sa: first signal
- Sb: second signal
- t1: first time point
- t2: second time point
- Ta: first time
- Tb: second time
- Xa: lighting time
- Xb: lighting time
- Y: given value
- λa: period
- λb: period
- τa: pulse width
- τb: pulse width

## Claims

1. A lighting control device (1, 1') comprising a lamp unit (3, 3A, 3B) including a plurality of light emitting elements (2) adapted to be mounted in a vehicle (10), and a controller (12) configured to sequentially light the plurality of light emitting elements (2) one after another and to flash the plurality of light emitting elements (2),
**characterized in that** the lighting control device (1, 1') comprises
a receiver (11) that is configured to receive a first signal (Sa) and a second signal (Sb) having a period shorter than a period of the first signal (Sa); and that
the controller (12), when the receiver (11) receives the first signal (Sa), lights all the plurality of light emitting elements (2) and then sequentially lights the plurality of light emitting elements (2) one after another, and when the receiver (11) receives the second signal (Sb), lights all the plurality of light emitting elements (2) and then flashes all the plurality of light emitting elements (2).

2. The lighting control device (1) according to claim 1, wherein:
the first signal (Sa) is a signal that activates the lamp unit (3, 3A, 3B) as a turning signal lamp (9) used when the vehicle (10) is turning left or right or a hazard lamp used when the vehicle (10) is stopping or parking; and
the second signal (Sb) is a signal that activates the lamp unit (3, 3A, 3B) as an emergency braking display light used when the vehicle (10) is emergency braking.

3. The lighting control device (1') according to claim 1, wherein:
the first signal (Sa) is a signal that activates the lamp unit (3, 3A, 3B) as at least one of a stop lamp (7) and a high mount stop lamp (8) used when the vehicle (10) is braking at deceleration less than a threshold; and
the second signal (Sb) is a signal that activates the lamp unit (3, 3A, 3B) as an emergency braking display light used when the vehicle(10) is braking at deceleration equal to or more than a threshold.

4. The lighting control device (1, 1') according to any one of claims 1-3, wherein:
the receiver (11) receives the first signal (Sa) and the second signal (Sb) through a common signal line.

5. The lighting control device (1, 1') according to any one of claims 1-4, wherein:
the controller
when the receiver receives the first signal, lights all the plurality of light emitting elements for a first time correlated with the period of the first signal and then sequentially lights the plurality of light emitting elements one at a time, and
when the receiver receives the second signal, lights all the plurality of light emitting elements for a second time shorter than the first time and then flashes all the plurality of light emitting elements.

## Patentansprüche

1. Beleuchtungssteuerungsvorrichtung (1, 1') mit einer Lampeneinheit (3, 3A, 3B) mit einer Vielzahl von Lichtemissionselementen (2), die zur Montage in einem Fahrzeug (10) ausgelegt ist, und einem Controller (12), der dazu eingerichtet ist, sequentiell die Vielzahl von Lichtemissionselementen (2) nacheinander zu erleuchten und die Vielzahl von Lichtemissionselementen (2) blinken zu lassen,
**dadurch gekennzeichnet, dass** die Beleuchtungssteuerungsvorrichtung (1, 1') umfasst:
einen Empfänger (11), der dazu eingerichtet ist, ein erstes Signal (Sa) und ein zweites Signal (Sb) mit einer Periode, die kürzer ist als eine Periode des ersten Signals (Sa) zu empfangen; und dass
der Controller (12), wenn der Empfänger (11) das erste Signal (Sa) empfängt, alle der Vielzahl von Lichtemissionselementen (2) erleuchtet und dann sequentiell die Vielzahl von Lichtemissionselementen (2) nacheinander erleuchtet, und wenn der Empfänger (11) das zweite Signal (Sb) empfängt, alle der Vielzahl von Lichtemissionselementen (2) erleuchtet und dann alle der Vielzahl von Lichtemissionselementen (2) blinken lässt.

2. Beleuchtungssteuerungsvorrichtung (1) nach Anspruch 1, wobei:
das erste Signal (Sa) ein Signal ist, das die Lampeneinheit (3, 3A, 3B) als Blinkleuchte (9), die verwendet wird, wenn das Fahrzeug (10) nach links oder rechts abbiegt, oder Warnblinkleuchte, die verwendet wird, wenn das Fahrzeug (10) stoppt oder parkt, aktiviert; und
das zweite Signal (Sb) ein Signal ist, das die Lampeneinheit (3, 3A, 3B) als Notbremsanzeigelicht aktiviert, das verwendet wird, wenn das Fahrzeug (10) eine Notbremsung durchführt.

3. Beleuchtungssteuerungsvorrichtung (1') nach Anspruch 1, wobei:
das erste Signal (Sa) ein Signal ist, das die Lampeneinheit (3, 3A, 3B) als mindestens eine von einer Bremsleuchte (7) und einer oberen Bremsleuchte (8) aktiviert, die verwendet werden, wenn das Fahrzeug (10) mit einer Verlangsamung bremst, die geringer ist als ein Schwellenwert; und
das zweite Signal (Sb) ein Signal ist, das die Lampeneinheit (3, 3A, 3B) als Notbremsanzeigelicht aktiviert, das verwendet wird, wenn das Fahrzeug (10) mit einer Verlangsamung bremst, die gleich oder mehr als ein Schwellenwert ist.

4. Beleuchtungssteuerungsvorrichtung (1, 1') nach einem der Ansprüche 1-3, wobei:
der Empfänger (11) das erste Signal (Sa) und das zweite Signal (Sb) durch eine gemeinsame Signalleitung empfängt.

5. Beleuchtungssteuerungsvorrichtung (1, 1') nach einem der Ansprüche 1-4, wobei:
der Controller,
wenn der Empfänger das erste Signal empfängt, alle der Vielzahl von Lichtemissionselementen für eine erste Zeit erleuchtet, die mit einer Periode des ersten Signals korreliert ist, und dann sequentiell die Vielzahl von Lichtemissionselementen einzeln erleuchtet, und
wenn der Empfänger das zweite Signal empfängt, alle der Vielzahl von Lichtemissionselementen für eine zweite Zeit erleuchtet, die kürzer ist als die erste Zeit, und dann alle der Vielzahl von Lichtemissionselementen blinken lässt.

## Revendications

1. Dispositif de commande d'éclairage (1, 1') comportant un bloc de lampes (3, 3A, 3B) incluant une pluralité d'éléments électroluminescents (2) adaptés pour être montés dans un véhicule (10), et une commande (12) configurée pour allumer séquentiellement les éléments de la pluralité d'éléments électroluminescents (2) les uns après les autres et pour faire clignoter la pluralité d'éléments électroluminescents (2),
**caractérisé en ce que** le dispositif de commande d'éclairage (1, 1') comporte un récepteur (11) qui est configuré pour recevoir un premier signal (Sa) et un second signal (Sb) ayant une période plus courte qu'une période du premier signal (Sa) ; et **en ce que**
la commande (12), lorsque le récepteur (11) reçoit le premier signal (Sa), allume tous les éléments de la pluralité d'éléments électroluminescents (2) et allume ensuite séquentiellement les éléments de la pluralité d'éléments électroluminescents (2) les uns après les autres, et lorsque le récepteur (11) reçoit le second signal (Sb), allume tous les éléments de la pluralité d'éléments électroluminescents (2) et fait ensuite clignoter tous les éléments de la pluralité d'éléments électroluminescents (2).

2. Dispositif de commande d'éclairage (1) selon la revendication 1, dans lequel :
le premier signal (Sa) est un signal qui active le bloc de lampes (3, 3A, 3B) comme un feu clignotant (9) utilisé lorsque le véhicule (10) tourne à gauche ou à droite, ou comme un feu de détresse utilisé lorsque le véhicule (10) s'arrête ou se gare ; et
le second signal (Sb) est un signal qui active le bloc de lampes (3, 3A, 3B) comme un voyant de freinage d'urgence utilisé lorsque le véhicule (10) effectue un freinage d'urgence.

3. Dispositif de commande d'éclairage (1') selon la revendication 1, dans lequel :
le premier signal (Sa) est un signal qui active le bloc de lampes (3, 3A, 3B) comme au moins un élément parmi un feu de stop (7) et un feu de stop surélevé (8) utilisé lorsque le véhicule (10) freine à une décélération inférieure à un seuil ; et
le second signal (Sb) est un signal qui active le bloc de lampes (3, 3A, 3B) comme un voyant de freinage d'urgence utilisé lorsque le véhicule (10) freine à une décélération égale ou supérieure à un seuil.

4. Dispositif de commande d'éclairage (1, 1') selon l'une quelconque des revendications 1 à 3, dans lequel :
le récepteur (11) reçoit le premier signal (Sa) et le second signal (Sb) via une ligne de signal commune.

5. Dispositif de commande d'éclairage (1, 1') selon l'une quelconque des revendications 1 à 4, dans lequel :
la commande
lorsque le récepteur reçoit le premier signal, allume tous les éléments de la pluralité d'éléments électroluminescents pendant une première durée corrélée à la période du premier signal, et allume ensuite séquentiellement les éléments de la pluralité d'éléments électroluminescents un par un, et
lorsque le récepteur reçoit le second signal, allume tous les éléments de la pluralité d'éléments électroluminescents pendant une seconde durée plus courte que la première durée, et fait ensuite clignoter tous les éléments de la pluralité d'éléments électroluminescents.
